# EUROPEAN PATENT SPECIFICATION

(11) **EP 3 961 871 B1**
(45) Date of publication and mention of the grant of the patent: **29.05.2024**
(21) Application number: 21194426.9
(22) Date of filing: 01.09.2021
(51) Int. Cl.: H02K 3/51, H02K 15/00

(54) **A SYSTEM FOR SUPPORTING TURNS OF GENERATOR ROTOR ENDWINDING COILS AND A METHOD FOR WINDING AND REWINDING OF A POWER GENERATOR FOR A FOSSIL OR A NUCLEAR POWER PLANT**
SYSTEM ZUM TRAGEN VON WINDUNGEN VON GENERATORROTORENDWICKLUNGSSPULEN UND VERFAHREN ZUM AUF- UND ABWICKELN EINES STROMGENERATORS FÜR EIN FOSSILES ODER NUKLEARES KRAFTWERK
SYSTÈME DE SUPPORT DE SPIRES DE BOBINES D'ENROULEMENT D'EXTRÉMITÉ DE ROTOR DE GÉNÉRATEUR ET PROCÉDÉ D'ENROULEMENT ET DE REMBOBINAGE DE GÉNÉRATEUR DE PUISSANCE POUR CENTRALE FOSSILE OU NUCLÉAIRE

(43) Date of publication of application: 02.03.2022
(73) Proprietor: General Electric Technology GmbH, 5400 Baden (CH)
(72) Inventor: Biela, Marcin, Wroclaw (PL); Bodnar, Wojciech, Wroclaw (PL)
(74) Representative: Wesela-Bauman, Grzegorz

(56) References cited:
- JP-A- H03 256 545
- JP-A- H04 325 849
- JP-A- S59 106 841
- JP-A- 2006 158 070

## Description

### TECHNICAL FIELD

Embodiments of this disclosure relate generally to generator rotors and, more specifically, to a system for supporting turns of generator rotor endwinding coils and a method for winding and rewinding of a power generator for a fossil or a nuclear power plant.

### DISCUSSION OF ART

The endwinding coils of the windings of a dynamoelectric machine, such as, for example, a generator rotor, are typically spaced with insulating blocking, known as spacing blocks or spacer blocks. This blocking retains the integrity of the coil stacks of the endwindings, transfers lateral and circumferential thermal loads and also the ones which derive from circumferential forces (during operation), and provides space for ventilation, among other features. Correct alignment and position of the blocking is necessary for proper functioning of the generator rotor endwindings. By way of exemplification and not limitation, reference may be had to U.S. Patent No. 6,465,917; U.S. Patent No. 6,956,313; and U.S. Patent No. 7,342,345 for teachings of spacer blocks at axially spaced locations between turns of generator rotor endwinding coils.

In some cases, depending on the features of the rotor body and the endwinding coils, along with the production and service technology utilized with such components, the spacer blocks can complicate the assembly and service of a generator rotor. For example, the generator rotor endwinding coils of some generator rotors are disposed on insulation or support bars that also have the function of separating zones of cold and hot gas for the ventilation system of the generator rotor. These zones of cold and hot gas can be referred to as the zone of higher/mid/lower pressure, in reference to the direction of gas flow. Sometimes these support bars are replaced during the assembly and service of a generator rotor. For example, after the processes of insulation varnish baking and final overspeed testing, the support bars are replaced to obtain proper construction gaps of the turns of the generator rotor endwinding coils in order to ensure the right conditions for the coils to work during generator rotor operation. The designs of currently available spacer blocks are not well suited for use during this replacement of the support bars, and as a result, the spacer blocks are subject to misalignment while the support bars are replaced.

In order to inhibit misalignment of the spacer blocks, one approach relies on the use of copper pins to retain the integrity of the stacks of the generator rotor endwinding coils during the assembly, service and operation of the generator rotor. In particular, the spacer blocks are drilled with transverse extending holes, inserted with round, copper pins that penetrate partially through the coils, and brazed to facilitate a secure engagement with the coils. To this extent, the brazed copper pins keep the spacer blocks in place. However, there are disadvantages associated with the use of the brazed copper pins to inhibit misalignment of the spacer blocks. For example, drilling the holes in the coils to receive the pins causes chips, burrs or other process contaminants, and thus, necessitate careful cleaning and removal in order to not affect the operation of the generator rotor endwinding coils. In addition, the brazed copper pins can crack during operation of the generator rotor, which can affect the performance of the generator rotor. Also, since the pins are of copper, it is possible that this conducting material can create short circuits between the turns of the generator rotor endwinding coils, which can result in forced power outages due to the stopping of the operation of the generator rotor.

Furthermore, these brazed copper pins can be a hindrance during assembly and service of the generator rotor, such as rewinding of the coils, because oftentimes these pins are not compatible for use with generator rotor endwinding coils that differ from the original coils that the pins were designed to have direct applicability with. Also, the brazed copper pins may not be compatible for use with assembly and service technology processes that differ from that originally used to assemble and service coils with such pins. Consequently, the different type of assembly and service technology processes necessitate significant and costly changes to accommodate the continued use of the brazed copper pins including, but not limited to, corner brazing of each turn between the endwinding part and the active part, special equipment for drilling on single bows before connecting it into a half-turn, additional shaft machining for the support bars to accommodate newer and/or different-shaped coils during assembly or rewinding of the coils, and careful cleaning of the coils for contaminant removal.

Accordingly, there is a need for a different approach to supporting the spacing blocks between the generator rotor endwinding coils in light of the drawbacks associated with the brazed copper pins.

Document JPS59106841A discloses a rotor of an electric machine. Said rotor includes a circumferential spacing piece between end portions of winding. The circumferential spacing piece is supported with the use of a connecting plate placed in a groove made in the rotor. This solution aims at prevention of movement or drop of the circumferential spacing piece.

Document JPH03256545A pertains to a device for fixing coils on a rotor of an electric machine. The device includes a holding plate with protrusions and the holding plate is supported with a support ring. This solution is devoted to standardization of designs of rotors.

Document JPH04325849A discloses a winding of a rotor. Said winding includes a spacing piece supported with bindings. Said spacing piece is connected with the windings with a fixing tape. A guide projection is provided on the top surface of the spacing piece which is relevant for ventilation. This is because the solution of this document aims at securing of proper cooling.

Document JP2006158070A refers to an electric generator. The purpose of a solution of JP2006158070A is to maintain cooling capacity. This solution contains a spacer disposed between rotor coils, wherein the spacer includes a protrusion on its top surface. Said spacer is held by a retainer

### BRIEF DESCRIPTION

The problem of the prior-art is solved by the invention as defined in the claims. The invention is a system of claim 1, a method of claim 9, a generator rotor of claim 14 and an electrical generator of claim 15.

Below there is a general description of various embodiments which may or may not be included in the scope of protections provided by the claims. The purpose of this general description is to explain in the broadest sense the purpose and functioning of the invention and to discuss various possible modifications.

The various embodiments provide a system and method that obviate the need to use copper brazed pins to support the spacer blocks and inhibit misalignment, solving the problems associated with using the pins during assembly and service of the generator rotor including the rotor endwinding coils. Specifically, the system and method according to the various embodiments are well suited to position and inhibit misalignment of spacer blocks that can be disposed on at least one rotor endwinding support bar at axial ends of a generator rotor, making assembly and service of generator rotor endwinding coils less complicated because the relative position of the blocks to the coils is maintained. Also, the system and method according to the various embodiments eliminates other issues with the use of the copper brazed pins to support the spacer blocks and inhibit misalignment, such as the cleaning and removal of chips, burrs or other process contaminants that can affect the operation of the generator rotor endwinding coils. In addition, the system and method of the various embodiments avoid other problems of the copper brazed pins that can affect the performance of the generator rotor such as the cracking of the pins and the potential to create short circuits that result in forced power outages. Furthermore, the system and method according to the various embodiments is compatible for implementation with multiple types of assembly and service technology processes, and thus, make it unnecessary to undergo significant and costly changes to the generator rotor, the rotor endwinding coils, or any of the processes that are associated with servicing or installing the spacer blocks or the generator rotor endwinding coils.

To this extent, the system and method according to the various embodiments prevents all of the blocks from misalignment, and can be implemented with a multiple of design of coils including new coils and currently-used standard coils with corner bending instead of corner brazing, without costly adaptations and changes of the assembly and service technology processes (e.g., corner brazing and drilling of endwinding part and active part before connecting into a half-turn, additional shaft machining). As a result, there is a less amount of brazing of the coils at the bending between the active and endwinding part of each turn that would otherwise be necessary; the coils can have the same profile between the active and endwinding part (e.g., a fully bended coil from one copper profile); and the whole half-turns can be processed on the same production lines, that otherwise would require multiple production lines due to the incompatibility issues, thus shortening manufacturing time. Consequently, these benefits bring about a harmonization of technologies between new and those old generator rotors that would typically have required the costly adaptations and changes of the assembly and service technology processes to accommodate the new rotors.

### DRAWINGS

The present invention will be better understood from reading the following description of non-limiting embodiments, with reference to the attached drawings, wherein below:
FIG. 1 is an isometric view of a generator rotor according to the prior art;
FIG. 2 is an isometric view of a generator rotor with a partial cutaway showing windings including longitudinally oriented central windings and turns of endwindings, and an arrangement of endwinding spacer blocks to restrain the endwindings from relative longitudinal movement according to the prior art;
FIG. 3 is an isometric view of a generator rotor showing further details of an axial end of a generator rotor including copper brazed pins to support an arrangement of endwinding spacer blocks disposed between turns of endwindings according to the prior art;
FIG. 4 is an isometric view of a generator rotor showing an axial end with an arrangement of endwinding spacer blocks that are supported in a secure manner that prevents misalignment of the blocks during installation, service and operation of the rotor according to an embodiment of the present invention;
FIG. 5 is a longitudinal section view of an axial end of a generator rotor with spacer blocks disposed between turns of generator rotor endwinding coils coupled to outer projecting portions of support blocks located on the innermost coils of the turns, and a rotor endwinding support bar that supports the coils thereon according to an embodiment of the present invention;
FIG. 6 is an isometric view of a support block with the outer projecting portion according to an embodiment of the present invention;
FIG. 7 is an isometric view of a support block with the outer projecting portion and downward extending structures according to an embodiment of the present invention;
FIGS. 8A and 8B show isometric views of support blocks arranged in a pattern that includes blocks having downward extending structures alternating with blocks without downward extending structures according to an embodiment of the present invention;
FIG. 9 shows an isometric axial end view of a generator rotor without a rotor body having support blocks arranged in an alternating pattern of blocks having downward extending structures and blocks without downward extending structures coupled to the innermost coils of the turns according to an embodiment of the present invention;
FIG. 10 shows a cross-sectional axial end view of a generator rotor with a rotor body and rotor endwinding support bars coupled to the rotor body and support blocks disposed on the innermost coils of the turns according to an embodiment of the present invention;
FIG. 11 shows a schematic of an axial end view of a generator rotor with a rotor body, rotor endwinding support bars coupled to the rotor body and support blocks disposed on the innermost coils of the turns, along with spacer blocks disposed between the turns and coupled to the support blocks and the support bars according to an embodiment of the present invention;
FIGS. 12A and 12B show isometric views of an arrangement of torsional spring support bars coupled to selected spacer blocks at one end and torsional spring support spacer members at another end according to an embodiment of the present invention;
FIG. 13 shows a schematic isometric view showing the spacer blocks assembled with the turns of generator rotor endwinding coils, the support blocks, and the rotor endwinding support bar according to an embodiment of the present invention; and
FIG. 14 shows a cross-sectional view showing the spacer blocks assembled with the turns of generator rotor endwinding coils, the support blocks, and the rotor endwinding support bar according to an embodiment of the present invention.

### DETAILED DESCRIPTION

Example embodiments of the present invention will be described more fully hereinafter with reference to the accompanying drawings, in which some, but not all embodiments are shown. Indeed, the present invention should not be construed as limited to the embodiments set forth herein. Like numbers may refer to like elements throughout.

The various embodiments of the present invention are directed to generator rotors used with steam and gas turbines that can be implemented in any of a variety of power plants. Although the various embodiments are directed to generator rotors used with steam and gas turbines, these embodiments can have applicability to any type of dynamoelectric machine having a rotor body that uses spacer blocks to separate turns of rotor endwinding coils, and where it is desirable to inhibit misalignment of these blocks during assembly, service and operation of the dynamoelectric machine.

### Example 1 (Prior art)

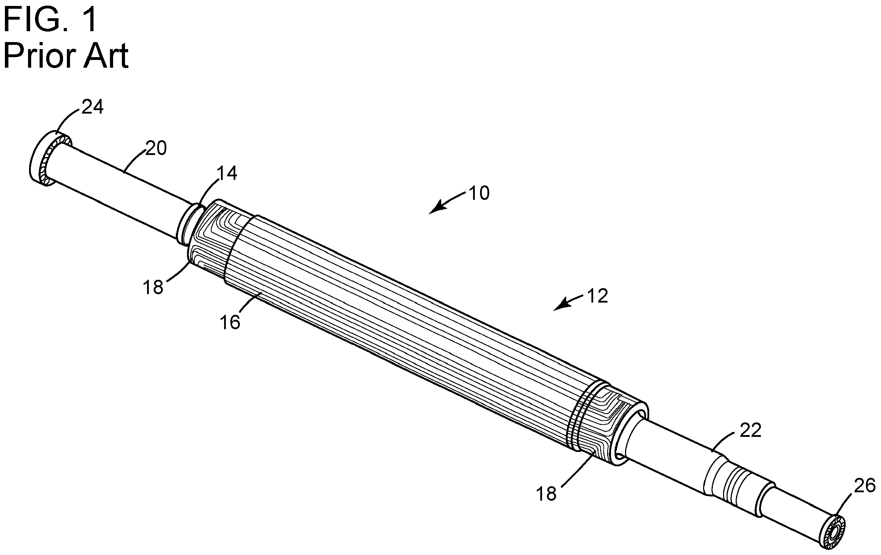

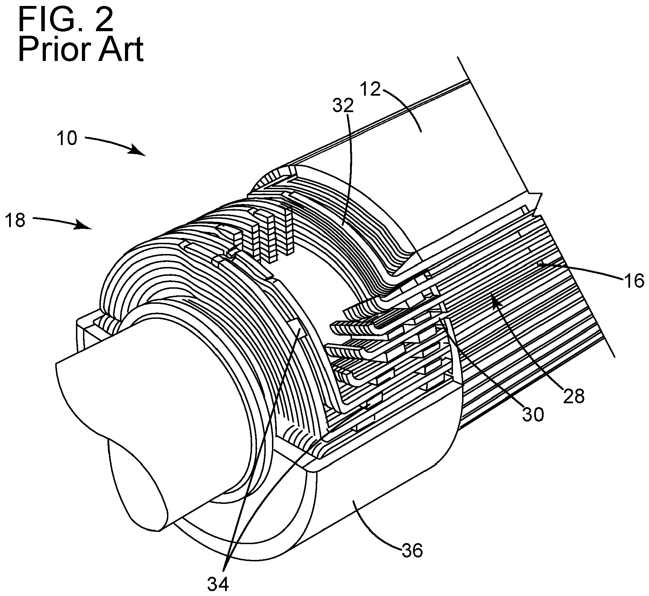

Turning now to the figures, FIG. 1 is an isometric view of a generator rotor 10 according to the prior art. As shown in FIG. 1, the generator rotor 10 includes a rotor body 12 that can be made of a ferrous metal material that is rotatably mounted on a shaft 14 via a bearing assembly (not illustrated). Arranged circumferentially about the mid-section of rotor body 12 are a multiple of axially oriented slot wedges 16 extending radially outward from a center of the rotor body. The slot wedges are used for holding multiple windings of coils that can be made of copper or aluminum. As shown and explained in further detail in FIG. 2, these multiple windings of coils include longitudinally oriented central windings secured with the slot wedges 16, and turns of endwindings extending out from the slot wedges at axial ends 18 of the rotor body 12. FIG. 1 further shows that the generator rotor 10 includes rotor end shaft portions 20 and 22, wherein in one embodiment, the rotor end shaft portion 20 is representative of a turbine end (i.e., the driven end) and the rotor end shaft portion 22 is representative of a collector end (i.e., the nondriven end). The generator rotor 10 can further include couplings 24 and 26 for connection with a turbine such as a steam turbine or gas turbine. In one embodiment, the couplings 24 and 26 can be used for connection with a gear reduction unit. In another embodiment, the coupling 26 may be used to connect with an exciter (not shown).

FIG. 2 is an isometric view of the generator rotor 10 with a partial cutaway showing windings 28 including longitudinally oriented central windings 30 and turns of endwindings 32, and an arrangement of endwinding spacer blocks 34 to restrain the endwindings from relative longitudinal movement according to the prior art. The rotor body 12 of the generator rotor 10, as shown in further detail in FIG. 2, includes the longitudinally or axially oriented slot wedges 16 that can extend the length of the rotor body towards the axial ends 18, and extend radially outward from a center of the rotor body. The windings 28, which can include, a series of coils, have segments disposed in the slot wedges 16. In particular, the windings 28 include the longitudinally oriented central windings 30 that are secured within the slot wedges 16, and the endwindings 32 that extend out from the slot wedges circumferentially about the rotor body 12. In general, the endwindings include a longitudinally-oriented portion of endwindings, and turns of endwindings. To this extent, the central windings 30 can extend the length of the rotor body 12 towards the axial ends 18, and extend radially outward from the center of the rotor body, while the endwindings 32 including the longitudinally-oriented portion of endwindings and the turns of endwindings, which are circumferentially spaced apart from each other, can extend circumferentially about the rotor body 12, and lie parallel to the rotor axis.

An arrangement of the endwinding spacer blocks 34, which can be referred to as spacer blocks or spacing blocks, or alternatively, rotor endwinding blocking members or blocking members, are radially disposed between the turns of endwindings 32 to restrain the endwindings from relative longitudinal movement. For purposes of illustration, the arrangement of spacer blocks 34 are shown sparingly in FIG. 2. It is understood that the spacer blocks are typically disposed at more appropriate axially intervals with respect to both the longitudinally-oriented portion of endwindings and the turns of endwindings. An annular retaining ring 36, which is shown in FIG. 2, is fitted over the axial end 18 of the rotor body 12, including the arrangement of the spacer blocks 34, to restrain the endwindings 32 from radial outward movement by centrifugal forces produced by the generator rotor 10. It is understood that although FIG. 2 shows only one end of the generator rotor 10, the other end of the rotor body 12 can include a similar configuration of components.

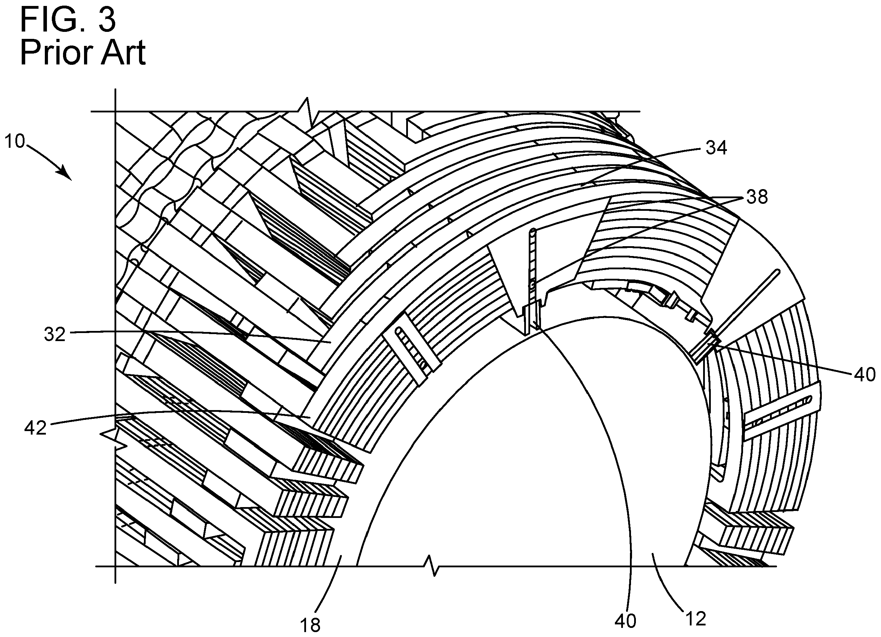

FIG. 3 is an isometric view of the generator rotor 10 showing further details of the axial end 18 of a generator rotor including copper pins 38 to support an arrangement of endwinding spacer blocks 34 disposed between turns of endwindings 32 according to the prior art. As shown in FIG. 3, the turns of spaced generator rotor endwinding coils 32 are disposed on a rotor endwinding support bar 40. In one embodiment, the rotor endwinding support bar 40 can be placed in slots machined into the axial end 18 of the rotor body 12. In addition to supporting the turns of spaced generator rotor endwinding coils 32, the support bars 40 also have the function of separating zones of cold and hot gas (higher/mid/lower pressure zones) for the ventilation system of the generator rotor 10.

As mentioned previously, sometimes the support bars 40 can be replaced during the assembly and service of the generator rotor 10. For example, after the processes of insulation varnish baking and final overspeed testing, the support bars 40 are replaced to obtain proper construction gaps of the turns of the generator rotor endwinding coils 32 in order to ensure the right conditions for the coils to work during generator rotor operation. In order to inhibit misalignment of the spacer blocks 34, the copper pins 38 are used to retain the integrity of the stacks of the rotor endwinding coils 32 in the turns. In particular, the spacer blocks 34 are drilled with transverse extending holes, inserted with the copper pins 38 that penetrate partially through the coils, and brazed to facilitate a secure engagement with the coils. To this extent, the brazed copper pins 38 keep the spacer blocks 34 in place.

However, there are disadvantages associated with the use of the brazed copper pins 38 to inhibit misalignment of the spacer blocks 34. As mentioned before, drilling the holes in the coils to receive the pins 38 causes chips, burrs or other process contaminants, and thus, necessitate careful cleaning and removal in order to not affect the operation of the rotor endwinding coils 32. In addition, the brazed copper pins 38 can crack during operation of the generator rotor 10, which can affect the performance of the generator rotor. Also, since the pins are of copper, it is possible that this conducting material can create short circuits between the turns of the generator rotor endwinding coils 32, which can result in forced power outages due to the stopping of the operation of the generator rotor 10.

Furthermore, these brazed copper pins 38 can be a hindrance during assembly and service of the generator rotor 10 because oftentimes these pins are not compatible for use with generator rotor endwinding coils 32 that differ from the original coils that the pins were designed to have direct applicability with. Also, the brazed copper pins 38 may not be compatible for use with assembly and service technology processes that differ from that originally used to assemble and service coils with such pins. Consequently, these different type of assembly and service technology processes necessitate significant and costly changes to accommodate the continued use of the brazed copper pins including, but not limited to, corner brazing of each turn between the endwinding part and the active part (represented by reference number 42 in FIG. 3), special equipment for drilling on single bows before connecting it into a half-turn, additional shaft machining for the support bars to accommodate newer and/or different-shaped coils during assembly or rewinding of the coils, and careful cleaning of the coils for contaminant removal.

### Example 2

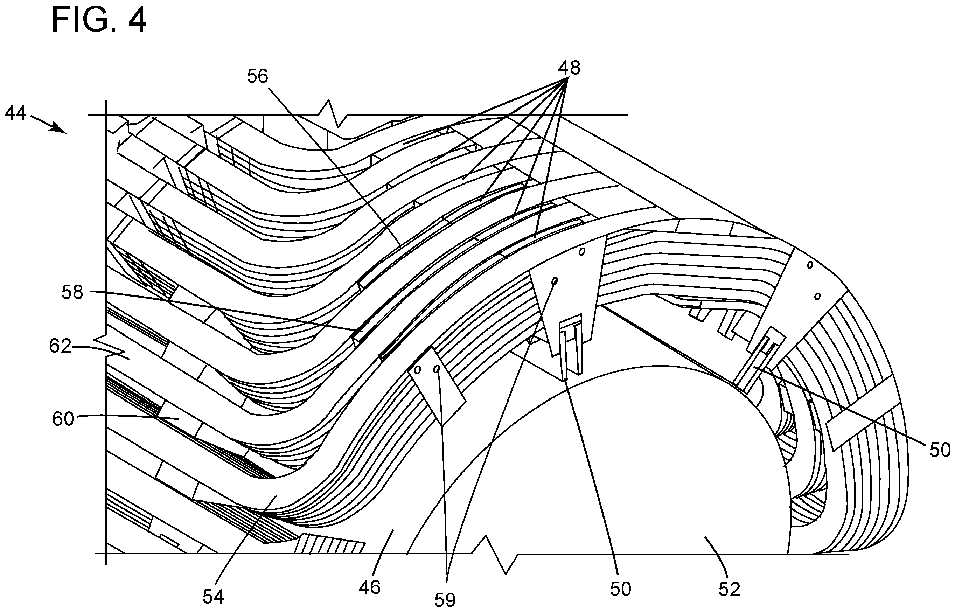

The various embodiments of the present invention provide a system and method for supporting spacer blocks axially placed between turns of the generator rotor endwinding coils that obviates the need to use copper brazed pins to support the spacer blocks and inhibit misalignment, solving the problems associated with using the pins during assembly and service of the generator rotor endwinding coils. FIG. 4 is an isometric view of a generator rotor 44 showing an axial end 46 with an arrangement of endwinding spacer blocks 48 that are supported in a secure manner that prevents misalignment of the blocks during installation, service and operation of the rotor according to an embodiment of the present invention. As shown in FIG. 4, the generator rotor 44 can include at least one rotor endwinding support bar 50 that extends axially over the axial end 46 of the rotor body 52 of the rotor 44 to support thereon the turns of spaced generator rotor endwinding coils 54. In general, the at least one rotor endwinding support bar 50 includes two spaced bars that extend axially over the axial end 46 of the rotor body 52 of the rotor 44. In one embodiment, the at least one rotor endwinding support bar 50 can be placed in slots machined into the axial end 46 of the rotor body 52. In addition to supporting the turns of spaced generator rotor endwinding coils 54, the support bar 50 also has the function of separating zones of cold and hot gas (higher/mid/lower pressure zones) for the ventilation system of the generator rotor 44. FIG. 4 shows the rotor body 52 with two support bars 50, however, it is understood that the rotor body can have more than two support bars, or only one support bar.

A plurality of support blocks, which are discussed below in more detail with respect to other figures in this disclosure, are coupled to an innermost rotor endwinding coil of the turns of spaced generator rotor endwinding coils 54 via a top surface of the support blocks. As used herein, "coupled to" means to join elements together through either direct attachment or indirect attachment. In one embodiment, the top surface of the support blocks can be coupled to the innermost rotor endwinding coil of the turns of spaced generator rotor endwinding coils 54 by brazing. The opposing bottom surface of the support blocks are disposed on a top surface of the at least one rotor endwinding support bar 50. In one embodiment, each of the support blocks includes an outer projecting portion that extends over the top surface of the at least one rotor endwinding support bar 50 beyond a perimeter of the rotor endwinding coil disposed on the block.

The arrangement of a plurality of endwinding spacer blocks 48 are radially disposed between the turns of spaced generator rotor endwinding coils 54. Each of the endwinding spacer blocks 48, which are discussed below in more detail with respect to other figures in this disclosure, includes a radially inboard end, a radially outboard end, and an opening at the radially inboard end extending a predetermined distance towards the radially outboard end. This configuration defines a pocket having elongated radially inboard ends separated by the opening and a receptacle formed between the elongated radially inboard ends. In one embodiment, the receptacle of each of the spacer blocks 48 receives therein an outer projecting portion of a support block that an adjacent turn of rotor endwinding coils 54 is disposed thereon.

As shown in FIG. 4, the generator rotor 44 can include plurality of torsional spring support bars 56 disposed between selected turns of spaced generator rotor endwinding coils 54. Each of the torsional spring support bars 56, which are discussed below in more detail with respect to other figures in this disclosure, can be coupled to one of the spacer blocks 48 disposed between the same corresponding turn. In one embodiment, each of the torsional spring support bars 56 includes a first side end and an opposing second side end. The first side end of each of the torsional spring support bars 56 can be coupled to the radially outboard end of the spacer block 48, while the second side end of the torsional spring support bars can be coupled to one of a plurality of torsional spring support spacer members 58 disposed between the selected turns of spaced generator rotor endwinding coils 54 having the torsional spring support bars 50. In one embodiment, fasteners 59 such as for examples, pins can fasten (i.e., lock and connect) the first side end and the second side end of each of the torsional spring support bars 56 to the spacer blocks 48 and the torsional spring support spacer members 58, respectively.

In addition to the spacer blocks 48 disposed between the turns of the spaced generator rotor endwinding coils 54, FIG. 4 shows that the generator rotor 44 can further include an arrangement of spacer blocks 60 that are disposed between a longitudinal portion of the endwindings 62. Like the spacer blocks 48, the spacer blocks 60 maintain the integrity of the longitudinal portion of the endwindings 62 and prevent misalignment. For example, in one embodiment, the spacer blocks 60 can be disposed between the longitudinal portion of the endwindings 62 and secured to adjacent endwindings through any of a number of well-known retention mechanism that can hold the blocks 60 in place. In one embodiment, the retention mechanism can include a capping layer having one end secured to the top of the block and another end secured to the adjacent endwinding. For example, the capping layer can include a semi-flexible, durable sheet of material such as a polymer sheet (e.g., NOMEX aramid paper, NOMEX -polyester laminate, KEVLAR, KAPTON, polyester, fiber and any other flexible durable non-metallic material).

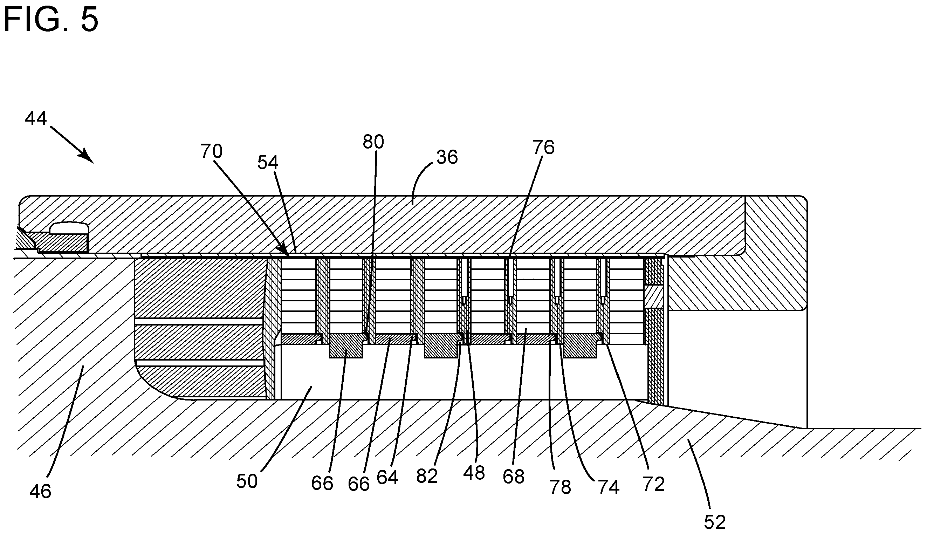

FIG. 5 is a longitudinal section view of the axial end 46 of the generator rotor 44 with spacer blocks 48 disposed between turns of rotor endwinding coils 54 coupled to outer projecting portions 64 of the support blocks 66 located on the innermost coils 68 of the turns, and the rotor endwinding support bar 50 that supports the coils thereon according to an embodiment of the present invention. As mentioned previously, the endwinding support bar 50 extends axially over the axial end 46 of the rotor body 52 to support thereon the turns of spaced generator rotor endwinding coils 54. FIG. 5 shows that the turns of spaced generator rotor endwinding coils 54 include stacks of coils 70. Each of the support blocks 66 is coupled to the innermost rotor endwinding coil 70 of one of the turns of spaced generator rotor endwinding coils 54. In one embodiment, each of the support blocks 66 is disposed on a top surface 72 of the at least one rotor endwinding support bar 50. As shown in FIG. 5, each of the of support blocks 66 includes an outer projecting portion 64 extending over the top surface 72 of the at least one rotor endwinding support bar 50 beyond a perimeter of the rotor endwinding coil disposed thereon. The outer projecting portion 64 can be any structure that protrudes outward away from the support blocks 66. Examples of an outer projecting portion that is suitable for use with the support blocks 66, can include, but not limited to, a pad, a ledge, a rim, and a pin. The outer projecting portion 64 can be formed as part of the support block 66, or it can be coupled to the support block using any of a number of well-known fastening or coupling technologies.

As shown in FIG. 5, the spacer blocks 48 are radially disposed between the turns of spaced generator rotor endwinding coils 54. Each of the spacer blocks includes a radially inboard end 74, a radially outboard end 76, and an opening 78 at the radially inboard end extending a predetermined distance towards the radially outboard end to define a pocket, which is shown in other figures and described in further detail, having elongated radially inboard ends separated by the opening and a receptacle formed between the elongated radially inboard ends. To this extent, the receptacle receives therein the outer projecting portion 64 of a support block 66 that an adjacent turn of rotor endwinding coils 54 is disposed thereon, while extending over the top surface of the support bars 50 that support the endwinding coils thereon.

In one embodiment, as depicted in FIG. 5, the outer projecting portion 64 of each of the support block 66 abuts an inner surface of the receptacle of respective spacer block 48 for radial engagement between the support block 66 and the spacer block 48. To this extent, abutting surfaces 80 of the outer projecting portion 64 and the receptacle can form a void 82 between the top surface 72 of the rotor endwinding support bar 50 and a region in the receptacle underneath the abutting surfaces. With the configuration, the engagement between the spacer blocks 48 and the support blocks 66 can be released during operation of the generator rotor 44 due to centrifugal forces pushing the spacer blocks outward from the support blocks 66 towards the retaining rings 36 that enclose the axial ends 46 of the generator rotor 44 including the turns of spaced generator rotor endwinding coils 54.

In instances, when the rotor endwinding support bar 50 is in place and the generator rotor 44 is in standstill, the shape of the outer projecting portion 64 of the support blocks 66 and the pocket of the spacer blocks 48 serves as a lock in the radial direction, and an additional stabilizer in the tangential direction to inhibit tangential rotation of the blocks. When the support bar 50 is removed during the rotor winding assembly process, the axial spacing block radial translation is also prevented by contact between the pocket of the spacer blocks 48 and the outer projecting portions 64 of the support blocks 66. This eliminates the risk of any uncontrollable displacement of the spacer blocks 48. As a result, the various embodiments avoid having to dismantle the whole retaining ring, damping cage and retaining ring insulation after the overspeed testing and balancing processes, as discussed above with respect to FIG. 3.

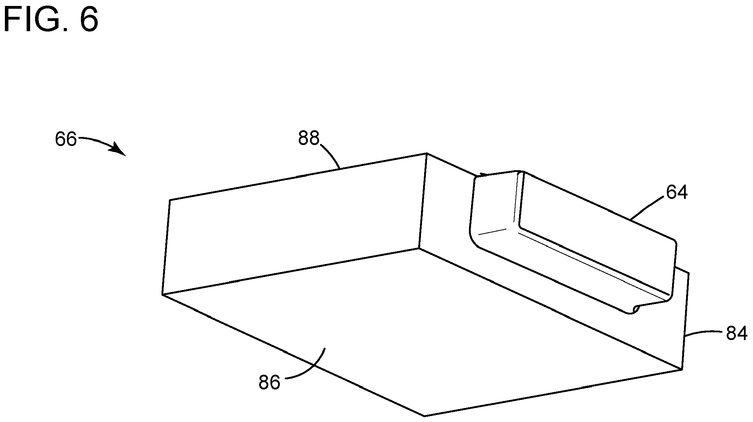

FIG. 6 is an isometric view of a support block 66 with the outer projecting portion 64 according to an embodiment of the present invention. In one embodiment, the support block 66 includes a solid piece of copper material with flat surfaces on each side. Although the support block 66 is preferably of copper material, it is understood that other materials including, but not limited to, an insulation material such as glass textolite (HGW). The outer projecting portion 64, which as mentioned above, can be integrated with the support block 66 or coupled to the block. In one embodiment, as shown in FIG. 6, the outer projecting portion 64 can be located on a side surface 84. In this manner, a bottom surface 86 of the support block 66 can be coupled to the at least one rotor endwinding support bar 50 (not shown), while a top surface 88 of the support block 66 can be coupled to the innermost coil of a turn of spaced generator rotor endwinding coils 54 (not shown).

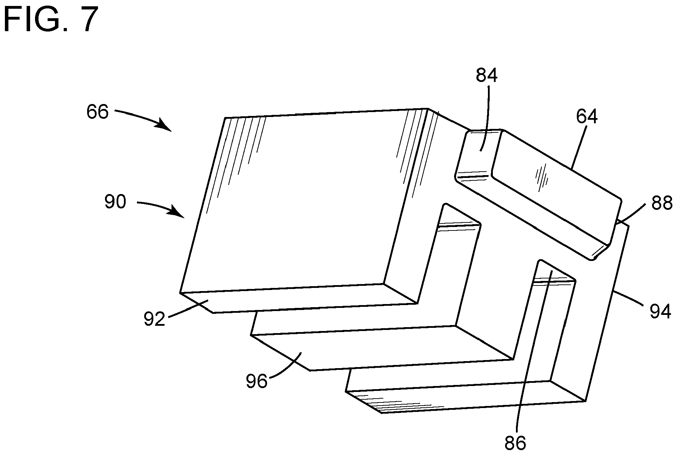

As noted above, some of the support blocks 66 can include downward extending structures that abut a side surface of the at least one rotor endwinding support bar 50. FIG. 7 is an isometric view of a support block 66 with the outer projecting portion 64 and downward extending structures 90 according to an embodiment of the present invention. In one embodiment, as shown in FIG. 7, the downward extending structures 90 of the support block 66 can include a first downward extending structure 92 and a second downward extending structure 94 each disposed on opposing side surfaces 84 of the support block 66, and a third downward extending structure 96 disposed on the bottom surface 86 of the support block extending between the first downward extending structure 92 and the second downward extending structure 94. In one embodiment, each of the first downward extending structure 92, the second downward extending structure 94, and the third downward extending structure 96 can be perpendicular to the outer projecting portion 64. With this configuration, the first downward extending structure 92, the second downward extending structure 94, and the third downward extending structure 96 can be coupled to the side surfaces of the support bar 50. For example, in one embodiment, the first downward extending structure 94, the second downward extending structure 96, and the third downward extending structure can be positioned or inserted between the axially extending portions of the support bar 50. In this manner, the first downward extending structure 94, the second downward extending structure 96, and the third downward extending structure each abut a side surface of the support bar 50 to secure the support block 66 to the support bar 50. Also, the top surface 88 of the support block 66 along with a portion of the first downward extending structure 92 and the second downward extending structure 94 can be coupled with the corresponding innermost rotor endwinding coil of a turn of spaced generator rotor endwinding coils 54 (not shown).

The downward extending structures 90 of the support block 66 depicted in FIG. 7 can be integrated with the block or these structures can be coupled to the blocks. For example, the downward extending structures 90 can be molded as part of the support block 66 with the outer projecting portion 64. In another embodiment, the downward extending structures 90 can be secured to the applicable side and bottom surfaces of the support block through any of a number of well-known fastening mechanisms that include, but are not limited to, pins, rivets, bonding material, brazing, gluing, and screwing with a screw.

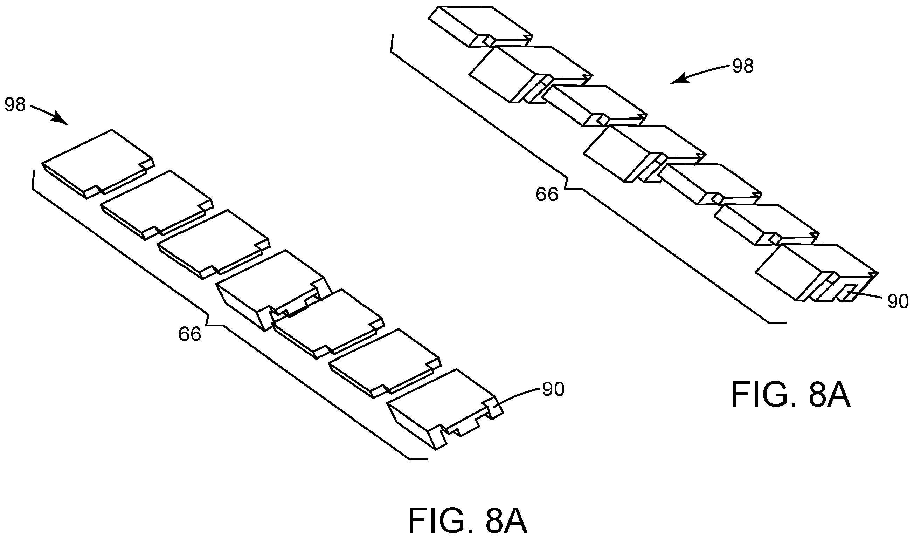

In one embodiment, the support blocks 66 depicted in FIGS. 6 and 7 can be used in conjunction with one another to operate cooperatively with the at least one rotor endwinding support bar 50 and the turns of spaced generator rotor endwinding coils 54. FIGS. 8A and 8B show isometric views of support blocks 66 arranged in a pattern 98 that includes blocks having downward extending structures 90 alternating with blocks 66 without downward extending structures according to an embodiment of the present invention. With this alternating pattern 98 depicted in FIGS. 8A and 8B, the downward extending structures (i.e., the first downward extending structure 92, the second downward extending structure 94, and the top surface 88 of the support block 66 can be coupled with the corresponding innermost rotor endwinding coil of a turn of spaced generator rotor endwinding coils 54 (not shown).

Further, with this configuration, the first downward extending structure 92, the second downward extending structure 94, and the third downward extending structure 96 of the support block 66 having the downward extending structures 90 can be coupled to the side surfaces of the support bar 50. For example, in one embodiment, the first downward extending structure 92, the second downward extending structure 94, and the third downward extending structure 96 can abut the side surfaces of the support bar 50. Also, the top surface 88 of both types of the support block 66 (i.e., with and without downward extending structures 90) can be coupled to the corresponding innermost rotor endwinding coil 68 of a turn of spaced generator rotor endwinding coils 54 (not shown).

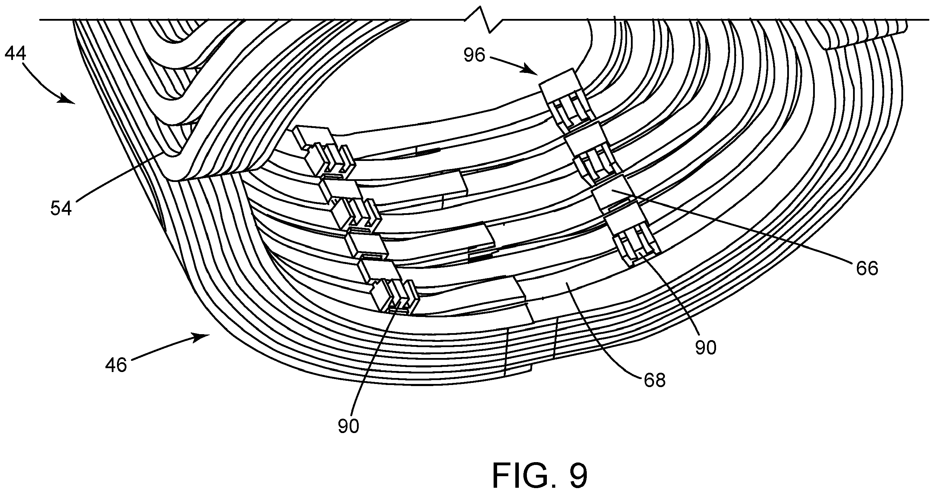

FIG. 9 shows an isometric axial end view of the generator rotor 44 without a rotor body having support blocks 66 arranged with the alternating pattern 98 of blocks having downward extending structures 90 and blocks without downward extending structures coupled to the innermost coils 68 of the turns of spaced generator rotor endwinding coils 54 according to an embodiment of the present invention. Although FIG 9 shows two sets of patterns 98 of support blocks 66, it is understood that this number is for illustration purposes and the number can depend on the amount of support bars that are utilized with the generator rotor 44. As mentioned above, each of the support blocks 66 that are included in the patterns 98 can be coupled to the innermost coils 68 by brazing. Other approaches can include, but are not limited to, gluing.

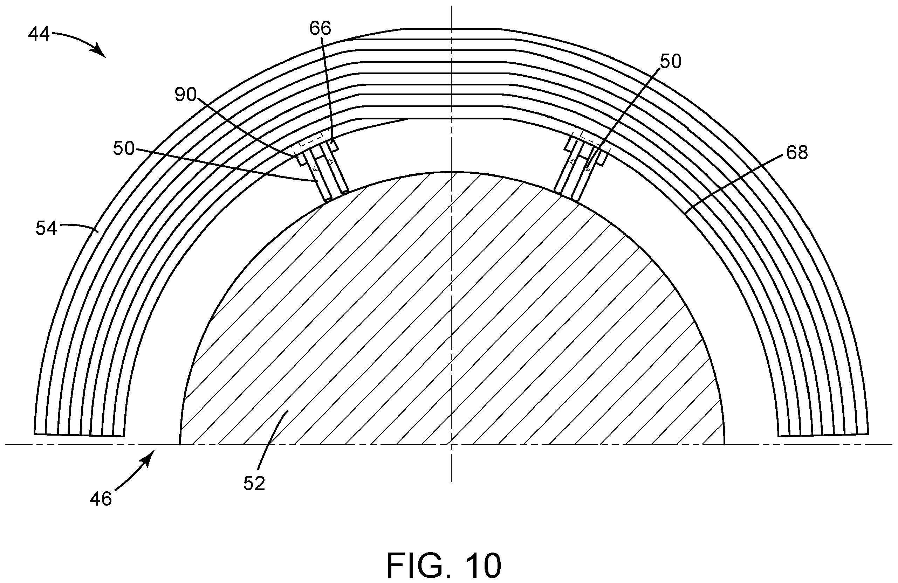

With the support blocks 66 coupled to the innermost coils 68 of the turns of spaced generator rotor endwinding coils 54, the downward extending structures 90 of the blocks with such structures can be secured to the rotor endwinding support bar 50. FIG. 10 shows a cross-sectional axial end view of the generator rotor 44 with the rotor body 52 and the rotor endwinding support bars 50 coupled to the rotor body and support blocks 66 disposed on the innermost coils 68 of the turns of generator rotor endwinding coils 54 according to an embodiment of the present invention. In one embodiment, the downward extending structures 90 of the support blocks 66 extend down over the side surfaces of the support bars 50. In this manner, the downward extending structures 90 secure the support bars 50 from tangential rotation, while the positioning of the bottom surface of the support blocks over the top surface of the support bars inhibits radial displacement of the bars.

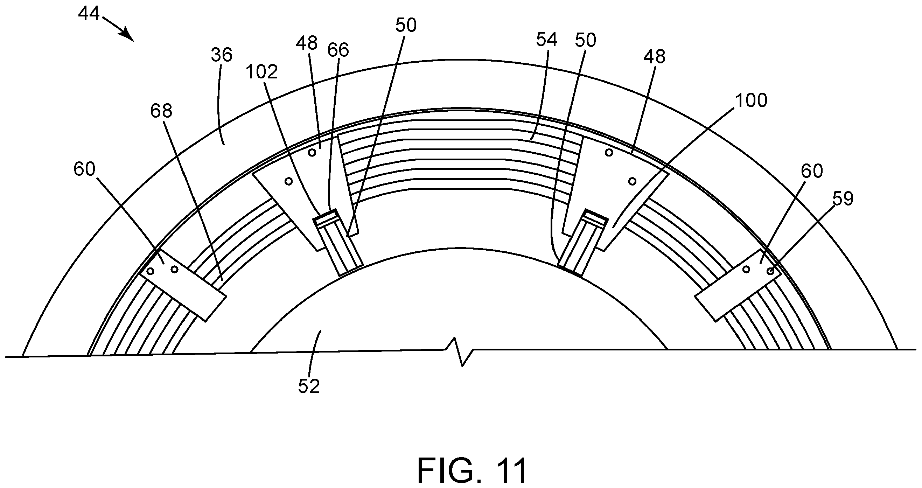

FIG. 11 shows a more detailed view of the generator rotor 44 with the spacer blocks 48 disposed between the turns of generator rotor endwinding coils 54 in relation to the support blocks 66 and the rotor endwinding support bars 50. In particular, FIG. 11 shows a schematic of an axial end view of the generator rotor 44 with the rotor body 52, the support bars 50 coupled to the rotor body and support blocks 66 disposed on the innermost coils 68 of the turns of generator rotor endwinding coils 54, along with the spacer blocks 48 disposed between the turns and coupled to the support blocks and the support bars according to an embodiment of the present invention. As shown in FIG. 11, elongated radially inboard ends 100 of the spacer blocks 48 enclose a portion of the side surfaces of the support bars 50, while the receptacle 102 of the spacer blocks that is formed between the elongated radially inboard ends 100, receives therein the outer projecting portion of support block 66 that is coupled to the turns of rotor endwinding coils 54. This pocket of the spacer blocks 48, that is defined by the elongated radially inboard ends 100 and the receptacles 102 formed in the opening between the ends, receives the outer projecting portion of the support blocks 66 to provide secure engagement between the spacer blocks 48, the support blocks 66 and the support bars 50. To this extent, the elongated radially inboard ends 100, which extend down over and against the downward extending structures of the support blocks 66 and the side surfaces of the support bars 50, prevent tangential rotation and radial displacement of the support bars. In addition, the engagement between the pockets 102 of the spacer blocks 48 with the outer projecting portions of the support blocks 66 maintains the integrity of the spacer blocks and supports their radially positioning within the turns of rotor endwinding coils 54 during assembly and service of the generator rotor 44. This support of the spacer blocks 48 is maintained further during operation of the generator rotor 44 by the annular retaining ring 36, which encloses the turns of rotor endwinding coils 54, and the spacer blocks 48 disposed in the turns, as well as the spacer blocks 60 that separate the longitudinal portion of the endwindings 62, to prevent radial displacement due to centrifugal forces that result from the rotation of the rotor body 52.

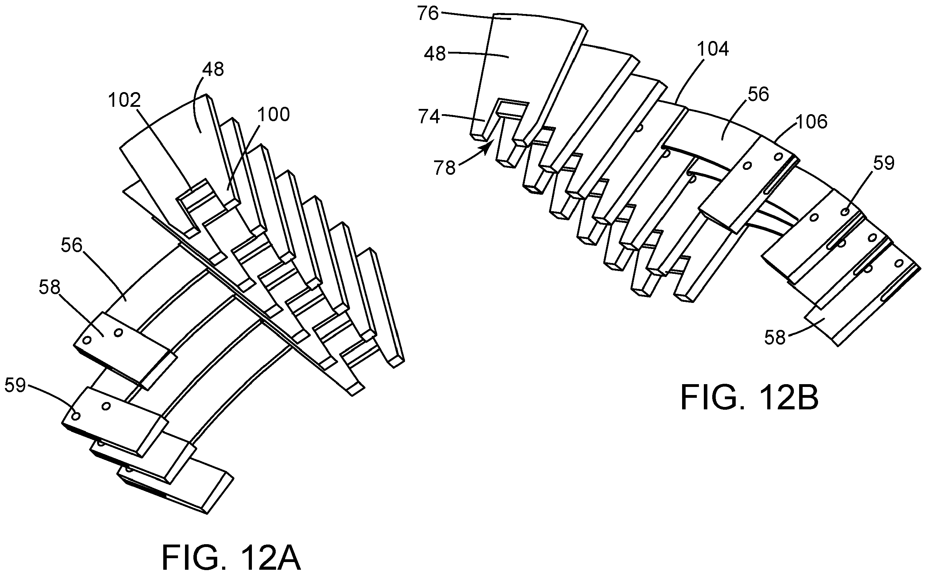

As mentioned above, the generator rotor 44 can have in one embodiment, a plurality of torsional spring support bars 56 and a corresponding plurality of torsional spring support spacer members 58 disposed between selected turns of the spaced generator rotor endwinding coils 54. FIGS. 12A and 12B show isometric views of an arrangement of the torsional spring support bars 56 coupled to selected spacer blocks 48 at a first side end 104 and the torsional spring support spacer members 58 at a second side end 106 according to an embodiment of the present invention. The torsional spring support bars 56 and the corresponding plurality of torsional spring support spacer members 58 can be used to provide further support and stabilization of the spacer blocks 48 within the selected turns of the spaced generator rotor endwinding coils 54, ensuring that the electrical distance between coils is kept during operation of the generator rotor. In addition, the torsional spring support bars 56 ensure micromovements between the coils and insulation components are limited during operation through axial tangential tension, and limit abrasion. Also, the torsional spring support bars 56 allow the location of the torsional spring support spacer members 58 to be properly established. It is understood that the position of the torsional spring support spacer members 58 can depend on specific endwinding length.

The torsional spring support bars 56 can include any of a number of mechanisms that can provide support between the spacer blocks 48 and the torsional spring support spacer members 58. In particular, the torsional spring support bars 56 can include, but are not limited to, a torsional bar, and a spring torsional bar.

The torsional spring support spacer members 58 can include any of a number of insulating materials that can be radially disposed between the selected turns of the spaced generator rotor endwinding coils 54. For example, the torsional spring support spacer members 58 can include, but are not limited to blocks, barriers, plates.

A fastener 59 can be used to securely couple the torsional spring support bars 56 to the radially outboard end 76 of the spacer blocks 48 and the torsional spring support spacer members 58. A number of well-known fastener mechanisms are suitable for coupling the first side ends 104 and the second side ends 106 of the torsional spring support bars 56 to the spacer bars 48 and the torsional spring support spacer members 58, respectively. For example, the fastener 108 can include, but are not limited to, pins, screws, threaded inserts, gluing, binding by cords/strings.

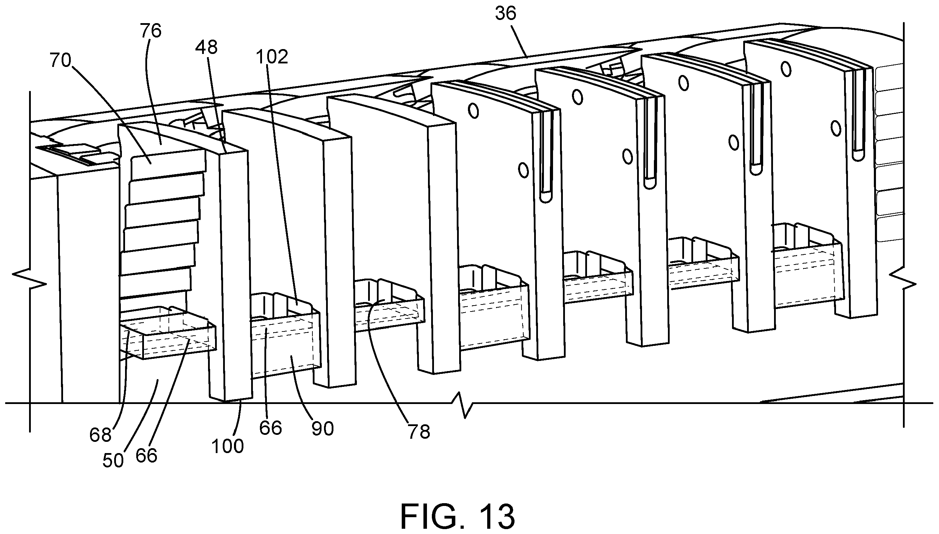

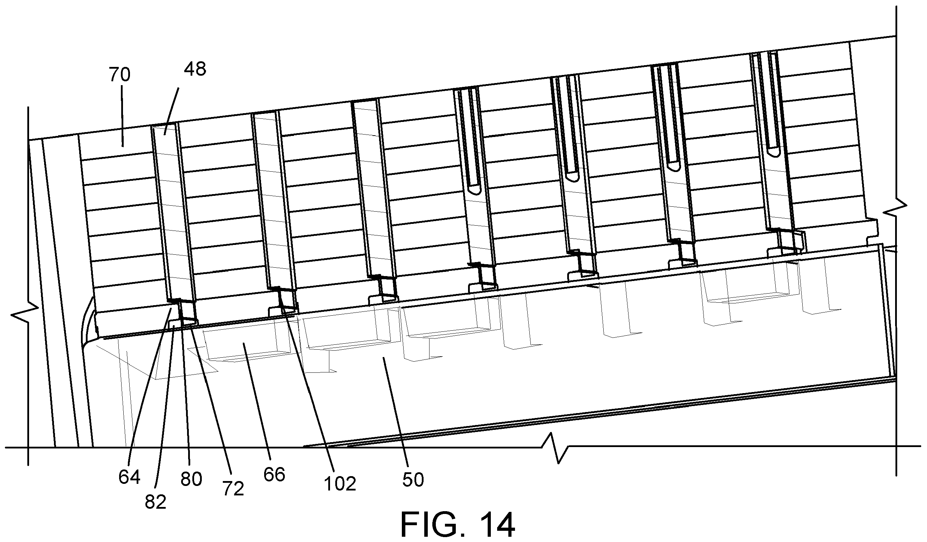

It is noted that FIGS. 12A-12B provide further views of the spacer blocks 48, including the radially inboard ends 74, the radially outboard ends 76, the openings 78 at the radially inboard ends 74 that extends towards the radially outboard ends 76, the elongated radially inboard ends 100, and the receptacles 102. The assembly of these elements of the spacer blocks 48 with the at least one rotor endwinding support bar 50 and the outer projecting portion of the support blocks is discussed further with regard to FIGS. 13 and 14.

FIG. 13 shows a schematic isometric view of the spacer blocks 48 assembled with the stacks of coils 70 that form each of the turns of generator rotor endwinding coils, the support blocks 66, and the rotor endwinding support bar 50 according to an embodiment of the present invention. As shown in FIG. 13, the spacer blocks 48 are radially disposed between the stacks of coils 70 that form each of the turns of generator rotor endwinding coils. In particular, the innermost coils of the stacks of each turn of generator rotor endwindings is coupled to the top surface of the support block that the turns are respectively disposed thereon. The outer projecting portion of the support blocks 66 is received in the receptacle 102 of an adjacent spacer block 48, while the downward extending structures 90 of the support blocks 66 extends downward and against the side surfaces of the support bar 50. In addition, the elongated radially inboard ends of the spacer blocks 48 extend downward and overlapping with the downward extending structures 90 of the support blocks 66 and the side surfaces of the support bar 50 to secure these elements and prevent tangential rotation.

FIG. 14 shows a different view of the assembly of the spacer blocks 48 with the support blocks 66 and the support bar 50. In particular, FIG. 14 shows a cross-sectional view of the spacer blocks 48 assembled within the stacks of coils 70 that form each of the turns of generator rotor endwinding coils, and coupled to the support blocks 66 and the rotor endwinding support bar 50 according to an embodiment of the present invention. As shown in FIG. 14, the outer projecting portions 64 of the support blocks 66 are received in the receptacles 102 of the spacer blocks 48, leaving a void 82 formed between the abutting surfaces 80 of the outer projecting portions and the receptacles between the top surface 72 of the support bar 50 and a region in the receptacle underneath the abutting surfaces.

The views presented in FIGS. 13 and 14 make clear that the spacer blocks 48 disposed in the turns of rotor endwinding coils 54 are fixedly supported with the outer projecting portions 64 of the support blocks 66, while at the same time providing stabilization to the support bars 50 of which the turns of coils are disposed thereon. As a result, the risk of uncontrollable displacement of the spacer blocks 48 when replacing the support bars 50 is eliminated.

In instances, when the rotor endwinding support bars 50 are in place and the generator rotor 44 is in standstill, the shape of the outer projecting portion 64 of the support blocks 66 and the pocket 102 of the spacer blocks 48 serves as a lock of the spacer blocks in the radial direction. Additionally, this engagement provides stabilization in the tangential direction to inhibit tangential rotation of the spacer blocks 48. Accordingly, the spacer blocks 48 are securely supported within the turns of spaced generator rotor endwinding coils 54 to prevent misalignment and displacement of the spacer blocks.

When the support bar 50 is removed during the rotor winding installation and service processes, axial spacing block radial translation is also prevented by contact between the pocket 102 of the spacer blocks 48 and the outer projecting portions 64 of the support blocks 66. This eliminates the risk of any uncontrollable displacement of the spacer blocks 48. As a result, the various embodiments avoid having to dismantle the whole retaining ring, damping cage and retaining ring insulation after the overspeed testing and balancing processes.

As noted above, the engagement between the spacer blocks 48 and the support blocks 66 can be released during operation of the generator rotor 44 due to centrifugal forces pushing the spacer blocks outward from the support blocks 66 towards the retaining rings 36 that enclose the axial ends 46 of the generator rotor 44 including the turns of spaced generator rotor endwinding coils 54.

### Example 3

In this example with reference to FIGS. 4-14, a system (44) for supporting turns of generator rotor endwinding coils (54) is provided for a generator in which the generator rotor endwinding coils (54) extend at least partially circumferentially about an axial end (46) of a rotor body (52).

This system comprises at least one support block (66), configured to be coupled to an innermost rotor endwinding coil (68) of one of the turns of generator rotor endwinding coils (54); and at least one spacer block (48) configured to be radially disposed between the turns of generator rotor endwinding coils (54), wherein said at least one spacer block (48) includes a radially inboard end (74), a radially outboard end (76), and an opening (78) at the radially inboard end (74) extending a predetermined distance towards the radially outboard end (76) to define a pocket having elongated radially inboard ends (100) separated by the opening (78) and a receptacle (102) formed between the elongated radially inboard ends (100).

Said at least one support block (66) includes an outer projecting portion (64); and wherein the receptacle (102) is configured to receive therein the outer projecting portion (64) of said at least one support block (66) coupled to an innermost rotor endwinding coil (68) of one of the turns of generator rotor endwinding coils (54); and wherein the outer projecting portion (64) of said at least one support block (66) is configured to support an inner surface of the receptacle (102).

The engagement between the pockets (102) of the spacer blocks (48) with the outer projecting portions (64) of the support blocks (66) supports radially positioning of the spacer blocks (48) within the turns of rotor endwinding coils (54) during assembly and service of the generator rotor (44). Translation is also prevented by the contact between the receptacles (102) of the spacer blocks (48) and the outer projecting portions (64) of the support blocks (66). This configuration eliminates the risk of any uncontrollable displacement of the spacer blocks (48). As a result, this avoids having to dismantle the whole retaining ring, damping cage and retaining ring insulation after the overspeed testing and balancing processes. The use of the above-defined support block (66) and spacer block (48) provides the correct alignment and position of the spacer blocks (48) for proper functioning of the generator rotor endwindings with an increased performance due to lack of the risk of crack of brazed copper pins and with a simplified and thus faster rewinding of a generator rotor. Avoiding the need to use brazed copper pins makes winding and rewinding easier and faster as cleaning and removal of chips, burrs or other process contaminants produced during installing of brazed copper pins is avoided.

In one embodiment, this system (44) is used in a 2-pole power generator and in another in a 4-pole power generator. This system (44) is applicable to generators used in fossil power plants and / or in nuclear power plants.

### Example 4

Example 4 modifies the system of example 3. Specifically, the system (44) further comprises one, two or at least three rotor endwinding support bars (50) wherein each said support bar (50) is configured to extend axially over the axial end (46) of the rotor body (52) and wherein said at least one support bar (50) comprises or consists of isolating material and / or wherein said at least one of the support blocks (66) comprises or consist of a material selected from a group comprising copper and isolating material.

The system (44) of this example allows for easy removal and thus replacement of rotor endwinding support bar (50), e.g., during assembling of a generator or in case of servicing of the generator. Additionally, the use of one rotor endwinding support bar (50) allows for introducing a cooling system for the rotor due to a possibility to separate cooled air from hot air. The use of two rotor endwinding support bars (50) provides an improved cooling system for the rotor due to separation of zones with hot and with cooled air wherein the section between the cooled air and the hot air acts as a thermal insulation. The use of at least three endwinding support bars (50) provides an even more improved cooling system due to a better separation of zones with hot and with cooled air wherein the sections between the cooled air and the hot air acts as thermal insulations.

The use of cooper in the support blocks (66) allows for coupling of said blocks (66) with the turns of coils using brazing which is a secured mounting process. The use of insulating materials allows for coupling of said blocks (66) with turns of coils using various glues.

### Example 5

Example 5 modifies the system of example 4. Specifically, said at least one of the support blocks (66) comprises at least one extending structure (90) configured to hold said one, two or at least three rotor endwinding support bars (50) and wherein said at least one extending structure (90) is perpendicular to the plane on which the outer projecting portion (64) is placed on.

The use of the extending structures (90) avoids the need for machining the rotor to stabilize the support bars (50). This makes the assembling process of a generator simpler and faster as one can avoid the step of machining the rotor. Also, the step of machining the rotor affects the rotor itself and can decrease its durability. Therefore, avoiding the step of machining by using the extending structures (90) ensures also a more durable rotor.

### Example 6

Example 6 modifies the system of example 5. Specifically, said at least one extending structure (90) comprises a first extending structure (92) and a second extending structure (94) or comprises a first extending structure (92), a second extending structure (94) and a third extending structure (96), wherein the first (92), the second (94) and the third extending structure (96) are disposed on a bottom surface (86) of the support block (66), wherein the third extending structure (96) extends between the first extending structure (92) and the second extending structure (94), wherein each of the first extending structure (92), the second extending structure (94), and the third extending structure (96) is perpendicular to the plane on which the outer projecting portion (64) is placed on, and wherein the first extending structure (92) and the second extending structure (94) are configured to secure at least one rotor endwinding support bar (50) therebetween and / or the second extending structure (94) and the third extending structure (96) are configured to secure at least one rotor endwinding support bar (50) therebetween.

This system enables to secure two support bars and thus to simultaneously avoid machining of a rotor while creating an improved cooling system for the rotor.

### Example 7

Example 7 modifies the system of examples 3-6. In this system (44), the elongated radially inboard ends (100) of said at least one spacer block (48) are configured to enclose a portion of side surfaces of said at least one rotor endwinding support bar (50).

This system (44) provides an improved stabilization to the support bars (50). Said stabilization is even more improved when said configuration of inboard ends (100) is used in conjunction with extending structures (90). Even better stabilization is achieved when said inboard ends (100) are used together with one extending structure (90) comprising a first extending structure (92) and a second extending structure (94) and the best stabilization is achieved when said one extending structure (100) comprises a first extending structure (92), a second extending structure (94) and a third extending structure (96).

In a different example compatible with examples 3-7, the top surface of the outer projecting portion (64) is co-planar with a top surface (88) of the support block (66). In addition, or alternatively, the thickness of the outer projecting portion (64) of the support block (66) is within the range of 20% to 80% of the thickness of the support block (66).

### Example 8

Example 8 pertains to a method for winding or rewinding of a generator according to the invention. The generator comprises generator rotor endwinding (54) coils that extend at least partially circumferentially about an axial end (46) of a rotor body (52). The method according to the Example 8 comprises: coupling at least one support block (66) to the turns of generator rotor endwinding coils (54), wherein said at least one support block (66) is coupled to an innermost rotor endwinding coil (68) of one of the turns of generator rotor endwinding coils (54), wherein said at least one support block (66) includes an outer projecting portion (64); and radially disposing at least one spacer block (48) radially between the turns of generator rotor endwinding coils (54), wherein said at least one spacer block (48) includes a radially inboard end (74), a radially outboard end (76), and an opening (80) at the radially inboard end (74) extending a predetermined distance towards the radially outboard end (76) to define a pocket having elongated radially inboard ends (100) separated by the opening (80) and a receptacle (102) formed between the elongated radially inboard ends (100), wherein the receptacle (102) receives therein the outer projecting portion (64) of said at least one support block (66) coupled to an innermost rotor endwinding coil (68) of one of the turns of generator rotor endwinding coils (54), and wherein the outer projecting portion (64) of said at least one support block (66) is configured to support an inner surface of the receptacle (102). The method according to the invention eliminates the need to use copper brazed pins and thus then need to install them and to clean the rotor from any chips or contaminants originating from installing said use copper brazed pins. It follows that the method according to the invention, in comparison to known methods, requires less effort to execute and thus the method is faster. As a result, servicing (winding or rewinding) will be performed faster which will limit any downtime of an electrical generator. Limitation of downtime of the electrical generator due to servicing is very desired as it provides, among others, more constant supply of electrical power.

While specific embodiments and examples are described herein for illustrative purposes, various modifications are possible within the scope of the invention as defined in the claims.

In the appended claims, the terms "including" and "in which" are used as the plain-English equivalents of the respective terms "comprising" and "wherein." Moreover, in the following claims, terms such as "first," "second," "third," "upper," "lower," "bottom," "top," etc. are used merely as labels, and are not intended to impose numerical or positional requirements on their objects. The terms "generally" and "about" indicate conditions within reasonably achievable manufacturing and assembly tolerances, relative to ideal desired conditions suitable for achieving the functional purpose of a component or assembly.

Moreover, articles "a" and "an" as used in the subject specification and annexed drawings should generally be construed to mean "one or more" unless specified otherwise or clear from context to be directed to a singular form. Furthermore, to the extent that the terms "includes," "has," "possesses," and the like are used in the detailed description, claims, appendices and drawings, such terms are intended to be inclusive in a manner similar to the term "comprising" as "comprising" is interpreted when employed as a transitional word in a claim. That is, unless explicitly stated to the contrary, embodiments "comprising," "including," or "having" an element or a plurality of elements having a particular property may include additional such elements not having that property.

## Claims

1. A system (44) for supporting turns of generator rotor endwinding coils (54), wherein the generator rotor endwinding coils (54) extend at least partially circumferentially about an axial end (46) of a rotor body (52), the system (44) comprises:
• at least one support block (66), and
• at least one spacer block (48) configured to be radially disposed between the turns of generator rotor endwinding coils (54),
wherein said at least one spacer block (48) includes:
• a radially inboard end (74),
• a radially outboard end (76), and
• an opening (78) at the radially inboard end (74) extending a predetermined distance towards the radially outboard end (76) to define a pocket having elongated radially inboard ends (100) separated by the opening (78) and
• a receptacle (102) formed between the elongated radially inboard ends (100), and
**characterized in that**
said at least one support block (66) is configured to be coupled to an innermost rotor endwinding coil (68) of one of the turns of generator rotor endwinding coils (54), and
wherein said at least one support block (66) includes:
• an outer projecting portion (64), and
wherein the receptacle (102) is configured to receive therein the outer projecting portion (64) of said at least one support block (66) coupled to the innermost rotor endwinding coil (68) of one of the turns of generator rotor endwinding coils (54), and
wherein the outer projecting portion (64) of said at least one support block (66) is configured to support an inner surface of the receptacle (102).

2. The system (44) of claim 1, **wherein** the system (44) further comprises one, two or at least three rotor endwinding support bars (50) wherein each said rotor endwinding support bar (50) is configured to extend axially over the axial end (46) of the rotor body (52) and wherein said at least one rotor endwinding support bar (50) comprises or consists of isolating material and / or wherein said at least one of the support blocks (66) comprises or consist of a material selected from a group comprising copper and isolating material.

3. The system (44) of claim 2, **wherein** said at least one of the support blocks (66) comprises at least one extending structure (90) configured to hold said one, two or at least three rotor endwinding support bars (50) and wherein said at least one extending structure (90) is perpendicular to the plane on which the outer projecting portion (64) is placed on.

4. The system (44) of claim 3, **wherein** said at least one extending structure (90) comprises a first extending structure (92) and a second extending structure (94) or comprises a first extending structure (92), a second extending structure (94) and a third extending structure (96), wherein the first (92), the second (94) and the third extending structure (96) are disposed on a bottom surface (86) of the support block (66), wherein the third extending structure (96) extends between the first extending structure (92) and the second extending structure (94), wherein each of the first extending structure (92), the second extending structure (94), and the third extending structure (96) is perpendicular to the plane on which the outer projecting portion (64) is placed on, and wherein the first extending structure (92) and the second extending structure (94) are configured to secure at least one rotor endwinding support bar (50) therebetween and / or the second extending structure (94) and the third extending structure (96) are configured to secure at least one rotor endwinding support bar (50) therebetween.

5. The system (44) of any of claims 2-4, **wherein** the elongated radially inboard ends (100) of said at least one spacer block (48) are configured to enclose a portion of side surfaces of said at least one rotor endwinding support bar (50).

6. The system (44) of any of claims 1-5, **further comprising** at least one torsional spring support bar (56) configured to be disposed between turns of generator rotor endwinding coils (54), wherein said at least one torsional spring support bar (56) is coupled to the spacer blocks (48), wherein said at least one torsional spring support bar (56) includes a first side end (104) and an opposing second side end (106) and wherein said at least one torsional spring support bar (56) comprises or consists of insulating material.

7. The system (44) of claim 5, **wherein** the first side end (104) is coupled to the radially outboard end (76) of the spacer block (48), and / or **wherein** the system (44) further comprises at least one torsional spring support spacer member (58) configured to be disposed between the turns of generator rotor endwinding coils (54) that comprise said at least one torsional spring support bar (56), wherein said at least one torsional spring support spacer member (58) is coupled to the second side end (106) of the torsional spring support bar (56) and wherein said at least one torsional spring support spacer member (58) comprises or consists of insulating material.

8. The system (44) of any of claims 1-7, **wherein** the top surface of the outer projecting portion (64) is co-planar with a top surface (88) of the support block (66) and / or **wherein** the thickness of the outer projecting portion (64) of the support block (66) is within the range of 20% to 80% of the thickness of the support block (66).

9. A method for winding or rewinding of a power generator, wherein the generator comprises generator rotor endwinding (54) coils that extend at least partially circumferentially about an axial end (46) of a rotor body (52), the method comprises:
• coupling at least one support block (66) to the turns of generator rotor endwinding coils (54), wherein said at least one support block (66) is coupled to an innermost rotor endwinding coil (68) of one of the turns of generator rotor endwinding coils (54), wherein said at least one support block (66) includes an outer projecting portion (64); and
• radially disposing at least one spacer block (48) radially between the turns of generator rotor endwinding coils (54), wherein said at least one spacer block (48) includes a radially inboard end (74), a radially outboard end (76), and an opening (80) at the radially inboard end (74) extending a predetermined distance towards the radially outboard end (76) to define a pocket having elongated radially inboard ends (100) separated by the opening (80) and a receptacle (102) formed between the elongated radially inboard ends (100), wherein the receptacle (102) receives therein the outer projecting portion (64) of said at least one support block (66) coupled to the innermost rotor endwinding coil (68) of one of the turns of generator rotor endwinding coils (54), and wherein the outer projecting portion (64) of said at least one support block (66) is configured to support an inner surface of the receptacle (102).

10. The method according to of claim 9, **wherein** the method comprises, before the step of coupling, placing at least one rotor endwinding support bar (50) about an axial end (46) of a rotor body (52) of the generator rotor (44), wherein said at least one rotor endwinding support bar (50) extends axially over the axial end (46) of the rotor body (52) and wherein said at least one support bar (50) comprises or consists of isolating material.

11. The method according to claim 10, **wherein** said at least one of the support blocks (66) comprises at least one extending structure (90) configured to hold said at least one rotor endwinding support bar (50) and wherein said at least one extending structure (90) is perpendicular to the plane on which the outer projecting portion (64) is placed on.

12. The method according to claim 11, **wherein** said at least one extending structure (90) comprises a first extending structure (92) and a second extending structure (94) or comprises a first extending structure (92), a second extending structure (94) and a third extending structure (96), wherein the first (92), the second (94) and the third extending structure (96) are disposed on a bottom surface (86) of the support block (66), wherein the third extending structure (96) extends between the first extending structure (92) and the second extending structure (94), wherein each of the first extending structure (92), the second extending structure (94), and the third extending structure (96) is perpendicular to the plane on which the outer projecting portion (64) is placed on, and wherein the first extending structure (92) and the second extending structure (94) are configured to secure at least one rotor endwinding support bar (50) therebetween and / or the second extending structure (94) and the third extending structure (96) are configured to secure at least one rotor endwinding support bar (50) therebetween.

13. The method according to any of claims 9-12, **further comprising** the elongated radially inboard ends (100) of said at least one spacer block (48) are configured to enclose a portion of side surfaces of said at least one rotor endwinding support bar (50).

14. A generator rotor (44), comprising turns of generator rotor endwinding coils (54), wherein the generator rotor endwinding coils (54) extend at least partially circumferentially about an axial end (46) of a rotor body (52), and **wherein** the generator rotor (44) further comprises a system (44) for supporting turns of generator rotor endwinding coils (54), as defined in any of claims 1-8.

15. An electrical generator for a power plant selected from a fossil power plant or a nuclear power plant, **wherein** the electrical generator comprises a system (44) for supporting turns of generator rotor endwinding coils (54) as defined in any of claims 1-8 and / or the generator rotor as defined in claim 14.

## Patentansprüche

1. System (44) zum Stützen von Windungen von Generatorrotor-Endwicklungsspulen (54), wobei sich die Generatorrotor-Endwicklungsspulen (54) mindestens teilweise in Umfangsrichtung um ein axiales Ende (46) eines Rotorkörpers (52) erstrecken, das System (44) umfassend:
• mindestens ein Stützblock (66), und
• mindestens einen Abstandshalterblock (48), der konfiguriert ist, um zwischen den Windungen der Generatorrotor-Endwicklungsspulen (54) radial angeordnet zu werden,
wobei der mindestens eine Abstandshalterblock (48) einschließt:
• ein radial innen liegendes Ende (74),
• ein radial außen liegendes Ende (76), und
• eine Öffnung (78) an dem radial innen liegenden Ende (74), die sich über eine vorbestimmte Distanz zu dem radial außen liegenden Ende (76) hin erstreckt, um eine Tasche zu definieren, die längliche, radial innen liegende Enden (100) aufweist, die durch die Öffnung (78) getrennt sind, und
• eine Aufnahme (102), die zwischen den länglichen, radial nach innen liegenden Enden (100) ausgebildet ist, und
**dadurch gekennzeichnet, dass**
der mindestens eine Stützblock (66) konfiguriert ist, um mit einer innersten Rotor-Endwicklungsspule (68) von einer der Windungen der Generatorrotor-Endwicklungsspulen (54) gekoppelt zu sein, und
wobei der mindestens eine Stützblock (66) einschließt:
• einen äußeren vorstehenden Abschnitt (64), und
wobei die Aufnahme (102) konfiguriert ist, um darin den äußeren vorstehenden Abschnitt (64) des mindestens einen Stützblocks (66) aufzunehmen, der mit der innersten Rotor-Endwicklungsspule (68) einer der Windungen der Generatorrotor-Endwicklungsspulen (54) gekoppelt ist, und
wobei der äußere vorstehende Abschnitt (64) des mindestens einen Stützblocks (66) konfiguriert ist, um eine innere Oberfläche der Aufnahmebehälter (102) zu stützen.

2. System (44) nach Anspruch 1, **wobei** das System (44) ferner einen, zwei oder mindestens drei Rotor-Endwicklungsstützstäbe (50) umfasst, wobei jeder Rotor-Endwicklungsstützstab (50) konfiguriert ist, um sich über das axiale Ende (46) des Rotorkörpers (52) axial zu erstrecken, und wobei der mindestens eine Rotor-Endwicklungsstützstab (50) isolierendes Material umfasst oder daraus besteht und/oder wobei der mindestens eine der Stützblöcke (66) ein Material umfasst oder daraus besteht, das aus einer Gruppe ausgewählt ist, umfassend Kupfer und isolierendes Material.

3. System (44) nach Anspruch 2, **wobei** der mindestens eine der Stützblöcke (66) mindestens eine Verlängerungsstruktur (90) umfasst, die konfiguriert ist, um die eine, zwei oder mindestens drei Rotor-Endwicklungsstützstäbe (50) zu halten, und wobei die mindestens eine Verlängerungsstruktur (90) senkrecht zu der Ebene ist, auf der der äußere vorstehende Abschnitt (64) platziert ist.

4. System (44) nach Anspruch 3, **wobei** die mindestens eine Verlängerungsstruktur (90) eine erste Verlängerungsstruktur (92) und eine zweite Verlängerungsstruktur (94) umfasst oder eine erste Verlängerungsstruktur (92), eine zweite Verlängerungsstruktur (94) und eine dritte Verlängerungsstruktur (96) umfasst, wobei die erste (92), die zweite (94) und die dritte Verlängerungsstruktur (96) auf einer unteren Oberfläche (86) des Stützblocks (66) angeordnet sind, wobei sich die dritte Verlängerungsstruktur (96) zwischen der ersten Verlängerungsstruktur (92) und der zweiten Verlängerungsstruktur (94) erstreckt, wobei jede der ersten Verlängerungsstruktur (92), der zweiten Verlängerungsstruktur (94) und der dritten Verlängerungsstruktur (96) senkrecht zu der Ebene ist, auf der der äußere vorstehende Abschnitt (64) platziert ist, und wobei die erste Verlängerungsstruktur (92) und die zweite Verlängerungsstruktur (94) konfiguriert sind, um mindestens einen Rotor-Endwicklungsstützstab (50) dazwischen zu befestigen, und/oder die zweite Verlängerungsstruktur (94) und die dritte Verlängerungsstruktur (96) konfiguriert sind, um mindestens einen Rotor-Endwicklungsstützstab (50) dazwischen zu befestigen.

5. System (44) nach einem der Ansprüche 2 bis 4, **wobei** die langgestreckten, radial innen liegenden Enden (100) des mindestens einen Abstandshalterblocks (48) konfiguriert sind, um einen Abschnitt der Seitenoberflächen des mindestens einen Rotor-Endwicklungsstützstabs (50) zu umschließen.

6. System (44) nach einem der Ansprüche 1 bis 5, **ferner umfassend** mindestens einen Torsionsfederstützstab (56), der konfiguriert ist, um zwischen Windungen von Generatorrotor-Endwicklungsspulen (54) angeordnet zu werden, wobei der mindestens eine Torsionsfederstützstab (56) mit den Abstandshalterblöcken (48) gekoppelt ist, wobei der mindestens eine Torsionsfederstützstab (56) ein erstes Seitenende (104) und ein gegenüberliegendes zweites Seitenende (106) einschließt, und wobei der mindestens eine Torsionsfederstützstab (56) isolierendes Material umfasst oder daraus besteht.

7. System (44) nach Anspruch 5, **wobei** das erste Seitenende (104) mit dem radial außen liegenden Ende (76) des Abstandshalterblocks (48) gekoppelt ist, und/oder **wobei** das System (44) ferner mindestens ein Torsionsfederstütze-Abstandshalterelement (58) umfasst, das konfiguriert ist, um zwischen den Windungen der Generatorrotor-Endwicklungsspulen (54) angeordnet zu sein, die den mindestens einen Torsionsfederstützstab (56) umfassen, wobei das mindestens eine Torsionsfederstütze-Abstandshalterelement (58) mit dem zweiten Seitenende (106) des Torsionsfederstützstabs (56) gekoppelt ist, und wobei das mindestens eine Torsionsfederstütze-Abstandshalterelement (58) ein isolierendes Material umfasst oder aus einem solchen besteht.

8. System (44) nach einem der Ansprüche 1 bis 7, **wobei** die obere Oberfläche des außen liegenden vorstehenden Abschnitts (64) koplanar mit einer oberen Oberfläche (88) des Stützblocks (66) ist und/oder **wobei** die Dicke des äußeren vorstehenden Abschnitts (64) des Stützblocks (66) innerhalb des Bereichs von 20 % bis 80 % der Dicke des Stützblocks (66) liegt.

9. Verfahren zum Wickeln oder Neuwickeln eines Leistungsgenerators, wobei der Generator Generatorrotor-Endwicklungs(54)-Spulen umfasst, die sich mindestens teilweise in Umfangsrichtung um ein axiales Ende (46) eines Rotorkörpers (52) erstrecken, wobei das Verfahren umfasst:
• Koppeln mindestens eines Stützblocks (66) mit den Windungen der Generatorrotor-Endwicklungsspulen (54), wobei der mindestens eine Stützblock (66) mit einer innersten Rotor-Endwicklungsspule (68) einer der Windungen der Generatorrotor-Endwicklungsspulen (54) gekoppelt ist, wobei der mindestens eine Stützblock (66) einen äußeren vorstehenden Abschnitt (64) einschließt; und
• radiales Anordnen mindestens eines Abstandshalterblocks (48) radial zwischen den Windungen der Generatorrotor-Endwicklungsspulen (54), wobei der mindestens eine Abstandshalterblock (48) ein radial innen liegendes Ende (74), ein radial außen liegendes Ende (76), und eine Öffnung (80) an dem radial innen liegenden Ende (74), die sich über eine vorbestimmte Distanz zu dem radial außen liegenden Ende (76) hin erstreckt, um eine Tasche, die längliche, radial innen liegende Enden (100) aufweist, die durch die Öffnung (80) getrennt sind, und eine Aufnahme (102), die zwischen den länglichen, radial innen liegenden Enden (100) ausgebildet ist, zu definieren, wobei die Aufnahme (102) darin den äußeren vorstehenden Abschnitt (64) des mindestens einen Stützblocks (66) aufnimmt, der mit der innersten Rotor-Endwicklungsspule (68) einer der Windungen der Generatorrotor-Endwicklungsspulen (54) gekoppelt ist, und wobei der äußere vorstehende Abschnitt (64) des mindestens einen Stützblocks (66) konfiguriert ist, um eine innere Oberfläche der Aufnahme (102) zu stützen.

10. Verfahren nach Anspruch 9, **wobei** das Verfahren vor dem Schritt des Koppelns, das Platzieren von mindestens einem Rotor-Endwicklungsstützstab (50) um ein axiales Ende (46) eines Rotorkörpers (52) des Generatorrotors (44) umfasst, wobei sich der mindestens eine Rotor-Endwicklungsstützstab (50) über das axiale Ende (46) des Rotorkörpers (52) axial erstreckt, und wobei der mindestens eine Stützstab (50) isolierendes Material umfasst oder daraus besteht.

11. Verfahren nach Anspruch 10, **wobei** der mindestens eine der Stützblöcke (66) mindestens eine Verlängerungsstruktur (90) umfasst, die konfiguriert ist, um den mindestens einen Rotor-Endwicklungsstützstab (50) zu halten, und wobei die mindestens eine Verlängerungsstruktur (90) senkrecht zu der Ebene ist, auf der der äußere vorstehende Abschnitt (64) angeordnet ist.

12. Verfahren nach Anspruch 11, **wobei** die mindestens eine Verlängerungsstruktur (90) eine erste Verlängerungsstruktur (92) und eine zweite Verlängerungsstruktur (94) umfasst oder eine erste Verlängerungsstruktur (92), eine zweite Verlängerungsstruktur (94) und eine dritte Verlängerungsstruktur (96) umfasst, wobei die erste (92), die zweite (94) und die dritte Verlängerungsstruktur (96) auf einer unteren Oberfläche (86) des Stützblocks (66) angeordnet sind, wobei sich die dritte Verlängerungsstruktur (96) zwischen der ersten Verlängerungsstruktur (92) und der zweiten Verlängerungsstruktur (94) erstreckt, wobei jede der ersten Verlängerungsstruktur (92), der zweiten Verlängerungsstruktur (94) und der dritten Verlängerungsstruktur (96) senkrecht zu der Ebene ist, auf der der äußere vorstehende Abschnitt (64) platziert ist, und wobei die erste Verlängerungsstruktur (92) und die zweite Verlängerungsstruktur (94) konfiguriert sind, um mindestens einen Rotor-Endwicklungsstützstab (50) dazwischen zu befestigen, und/oder die zweite Verlängerungsstruktur (94) und die dritte Verlängerungsstruktur (96) konfiguriert sind, um mindestens einen Rotor-Endwicklungsstützstab (50) dazwischen zu befestigen.

13. Verfahren nach einem der Ansprüche 9 bis 12, **ferner umfassend** die länglichen, radial innen liegenden Enden (100) des mindestens einen Abstandshalterblocks (48) konfiguriert sind, um einen Abschnitt der Seitenoberflächen des mindestens einen Rotor-Endwicklungsstützstabs (50) zu umschließen.

14. Generatorrotor (44), umfassend Windungen von Generatorrotor-Endwicklungsspulen (54), wobei sich die Generatorrotor-Endwicklungsspulen (54) mindestens teilweise in Umfangsrichtung um ein axiales Ende (46) eines Rotorkörpers (52) erstrecken, und **wobei** der Generatorrotor (44) ferner ein System (44) zum Stützen von Windungen von Generatorrotor-Endwicklungsspulen (54) umfasst, wie in einem der Ansprüche 1 bis 8 definiert.

15. Elektrischer Generator für ein Kraftwerk, ausgewählt aus einem fossilen Kraftwerk oder einem Kernkraftwerk, **wobei** der elektrische Generator ein System (44) zum Stützen von Windungen von Generatorrotor-Endwicklungsspulen (54), wie in einem der Ansprüche 1 bis 8 definiert, und/oder den Generatorrotor, wie in Anspruch 14 definiert, umfasst.

## Revendications

1. Système (44) pour supporter des spires de bobines d'enroulement de rotor de générateur (54), dans lequel les bobines d'enroulement de rotor de générateur (54) s'étendent au moins partiellement de manière circonférentielle autour d'une extrémité axiale (46) d'un corps de rotor (52), le système (44) comprend :
• au moins un bloc de support (66), et
• au moins un bloc d'espacement (48) conçu pour être disposé radialement entre les spires de bobines d'enroulement de rotor de générateur (54),
dans lequel ledit au moins un bloc d'espacement (48) comporte :
• une extrémité radialement intérieure (74),
• une extrémité radialement extérieure (76), et
• une ouverture (78) à l'extrémité radialement intérieure (74) s'étendant sur une distance prédéterminée vers l'extrémité radialement extérieure (76) pour définir une poche ayant des extrémités radialement intérieures allongées (100) séparées par l'ouverture (78) et
• un réceptacle (102) formé entre les extrémités radialement intérieures allongées (100), et
**caractérisé en ce que**
ledit au moins un bloc de support (66) est conçu pour être accouplé à une bobine d'enroulement de rotor la plus intérieure (68) de l'une des spires de bobines d'enroulement de rotor de générateur (54), et
dans lequel ledit au moins un bloc de support (66) comporte :
• une partie saillante extérieure (64), et
dans lequel le réceptacle (102) est conçu pour recevoir en son sein la partie saillante extérieure (64) dudit au moins un bloc de support (66) accouplé à la bobine d'enroulement de rotor la plus intérieure (68) de l'une des spires de bobines d'enroulement de rotor de générateur (54), et
dans lequel la partie saillante extérieure (64) dudit au moins un bloc de support (66) est conçue pour supporter une surface intérieure du réceptacle (102).

2. Système (44) selon la revendication 1, **dans lequel** le système (44) comprend en outre une, deux ou au moins trois barres de support d'enroulement de rotor (50) dans lequel chaque barre de support d'enroulement de rotor (50) est conçue pour s'étendre axialement sur l'extrémité axiale (46) du corps de rotor (52) et dans lequel ladite au moins une barre de support d'enroulement de rotor (50) comprend ou est constituée d'un matériau isolant et/ou dans lequel ledit au moins un des blocs de support (66) comprend ou est constitué d'un matériau choisi dans un groupe comprenant le cuivre et le matériau isolant.

3. Système (44) selon la revendication 2, **dans lequel** ledit au moins un des blocs de support (66) comprend au moins une structure d'extension (90) conçue pour maintenir lesdites une, deux ou au moins trois barres de support d'enroulement de rotor (50) et dans lequel ladite au moins une structure d'extension (90) est perpendiculaire au plan sur lequel la partie saillante extérieure (64) est placée.

4. Système (44) selon la revendication 3, **dans lequel** ladite au moins une structure d'extension (90) comprend une première structure d'extension (92) et une seconde structure d'extension (94) ou comprend une première structure d'extension (92), une deuxième structure d'extension (94) et une troisième structure d'extension (96), dans lequel la première (92), la deuxième (94) et la troisième structure d'extension (96) sont disposées sur une surface inférieure (86) du bloc de support (66), dans lequel la troisième structure d'extension (96) s'étend entre la première structure d'extension (92) et la deuxième structure d'extension (94), dans lequel chacune de la première structure d'extension (92), la deuxième structure d'extension (94) et la troisième structure d'extension (96) sont perpendiculaires au plan sur lequel la partie saillante extérieure (64) est placée, et dans lequel la première structure d'extension (92) et la deuxième structure d'extension (94) sont conçues pour fixer au moins une barre de support d'enroulement de rotor (50) entre elles et/ou la deuxième structure d'extension (94) et la troisième structure d'extension (96) sont conçues pour fixer au moins une barre de support d'enroulement de rotor (50) entre elles.

5. Système (44) selon l'une quelconque des revendications 2 à 4, **dans lequel** les extrémités radialement intérieures allongées (100) dudit au moins un bloc d'espacement (48) sont conçues pour entourer une partie des surfaces latérales de ladite au moins une barre de support d'enroulement de rotor (50).

6. Système (44) selon l'une quelconque des revendications 1 à 5, **comprenant en outre** au moins une barre de support de ressort de torsion (56) conçue pour être disposée entre les spires de bobines d'enroulement de rotor de générateur (54), dans lequel ladite au moins une barre de support de ressort de torsion (56) est accouplée aux blocs d'espacement (48), dans lequel ladite au moins une barre de support de ressort de torsion (56) comporte une première extrémité latérale (104) et une seconde extrémité latérale opposée (106) et dans lequel ladite au moins une barre de support de ressort de torsion (56) comprend ou est constituée d'un matériau isolant.

7. Système (44) selon la revendication 5, **dans lequel** la première extrémité latérale (104) est accouplée à l'extrémité radialement extérieure (76) du bloc d'espacement (48), et/ou **dans lequel** le système (44) comprend en outre au moins un élément d'espacement de support de ressort de torsion (58) conçu pour être disposé entre les spires de bobines d'enroulement de rotor de générateur (54) qui comprennent ladite au moins une barre de support de ressort de torsion (56), dans lequel ledit au moins un élément d'espacement de support de ressort de torsion (58) est accouplé à la seconde extrémité latérale (106) de la barre de support de ressort de torsion (56) et dans lequel ledit au moins un élément d'espacement de support de ressort de torsion (58) comprend ou est constitué d'un matériau isolant.

8. Système (44) selon l'une quelconque des revendications 1 à 7, **dans lequel** la surface supérieure de la partie saillante extérieure (64) est coplanaire avec une surface supérieure (88) du bloc de support (66) et/ou **dans lequel** l'épaisseur de la partie saillante extérieure (64) du bloc de support (66) est comprise entre 20 % et 80 % de l'épaisseur du bloc de support (66).

9. Procédé de bobinage ou de rebobinage d'un générateur de puissance, dans lequel le générateur comprend des bobines d'enroulement (54) de rotor de générateur qui s'étendent au moins partiellement de manière circonférentielle autour d'une extrémité axiale (46) d'un corps de rotor (52), le procédé comprend :
• l'accouplement d'au moins un bloc de support (66) aux spires de bobines d'enroulement de rotor de générateur (54), dans lequel ledit au moins un bloc de support (66) est accouplé à une bobine d'enroulement de rotor la plus intérieure (68) de l'une des spires de bobines d'enroulement de rotor de générateur (54), dans lequel ledit au moins un bloc de support (66) comporte une partie saillante extérieure (64) ; et
• la disposition de manière radiale d'au moins un bloc d'espacement (48) entre les spires de bobines d'enroulement de rotor de générateur (54), dans lequel ledit au moins un bloc d'espacement (48) comprend une extrémité radialement intérieure (74), une extrémité radialement extérieure (76), et une ouverture (80) à l'extrémité radialement intérieure (74) s'étendant sur une distance prédéterminée vers l'extrémité radialement extérieure (76) pour définir une poche ayant des extrémités radialement intérieures allongées (100) séparées par l'ouverture (80) et un réceptacle (102) formé entre les extrémités radialement intérieures allongées (100), dans lequel le réceptacle (102) reçoit en son sein la partie saillante extérieure (64) dudit au moins un bloc de support (66) accouplé à la bobine d'enroulement de rotor la plus intérieure (68) de l'une des spires de bobines d'enroulement de rotor de générateur (54), et dans lequel la partie saillante extérieure (64) dudit au moins un bloc de support (66) est conçue pour supporter une surface intérieure du réceptacle (102).

10. Procédé selon la revendication 9, **dans lequel** le procédé comprend, avant l'étape d'accouplement, le placement d'au moins une barre de support d'enroulement de rotor (50) autour d'une extrémité axiale (46) d'un corps de rotor (52) de rotor de générateur (44), dans lequel ladite au moins une barre de support d'enroulement de rotor (50) s'étend axialement sur l'extrémité axiale (46) du corps de rotor (52) et dans lequel ladite au moins une barre de support (50) comprend ou est constituée d'un matériau isolant.

11. Procédé selon la revendication 10, **dans lequel** ledit au moins un des blocs de support (66) comprend au moins une structure d'extension (90) conçue pour maintenir ladite au moins une barre de support d'enroulement de rotor (50) et dans lequel ladite au moins une structure d'extension (90) est perpendiculaire au plan sur lequel la partie saillante extérieure (64) est placée.

12. Procédé selon la revendication 11, **dans lequel** ladite au moins une structure d'extension (90) comprend une première structure d'extension (92) et une seconde structure d'extension (94) ou comprend une première structure d'extension (92), une deuxième structure d'extension (94) et une troisième structure d'extension (96), dans lequel la première (92), la deuxième (94) et la troisième structure d'extension (96) sont disposées sur une surface inférieure (86) du bloc de support (66), dans lequel la troisième structure d'extension (96) s'étend entre la première structure d'extension (92) et la deuxième structure d'extension (94), dans lequel chacune de la première structure d'extension (92), la deuxième structure d'extension (94) et la troisième structure d'extension (96) sont perpendiculaires au plan sur lequel la partie saillante extérieure (64) est placée, et dans lequel la première structure d'extension (92) et la deuxième structure d'extension (94) sont conçues pour fixer au moins une barre de support d'enroulement de rotor (50) entre elles et/ou la deuxième structure d'extension (94) et la troisième structure d'extension (96) sont conçues pour fixer au moins une barre de support d'enroulement de rotor (50) entre elles.

13. Procédé selon l'une quelconque des revendications 9 à 12, **comprenant en outre** les extrémités radialement intérieures allongées (100) dudit au moins un bloc d'espacement (48) sont conçues pour entourer une partie des surfaces latérales de ladite au moins une barre de support d'enroulement de rotor (50).

14. Rotor de générateur (44), comprenant des spires de bobines d'enroulement de rotor de générateur (54), dans lequel les bobines d'enroulement de rotor de générateur (54) s'étendent au moins partiellement de manière circonférentielle autour d'une extrémité axiale (46) d'un corps de rotor (52), et **dans lequel** le rotor de générateur (44) comprend en outre un système (44) pour supporter les spires de bobines d'enroulement de rotor de générateur (54), selon l'une quelconque des revendications 1 à 8.

15. Générateur électrique pour une centrale électrique choisie parmi une centrale fossile ou une centrale nucléaire, **dans lequel** le générateur électrique comprend un système (44) pour supporter les spires de bobines d'enroulement (54) de rotor de générateur selon l'une quelconque des revendications 1 à 8 et/ou le rotor de générateur selon la revendication 14.
